Europäisches Patentamt

European Patent Office

Office européen des brevets

(11) Publication number: **0 083 808**
**B1**

(12) **EUROPEAN PATENT SPECIFICATION**

(45) Date of publication of patent specification: **29.05.85**

(51) Int. Cl.⁴: **A 44 C 21/00, G 07 F 1/06, G 06 K 19/08, B 32 B 33/00**

(21) Application number: **82200021.2**

(22) Date of filing: **08.01.82**

(54) **Process for manufacturing a plastic token, and token manufactured by said process.**

(43) Date of publication of application:
**20.07.83 Bulletin 83/29**

(45) Publication of the grant of the patent:
**29.05.85 Bulletin 85/22**

(84) Designated Contracting States:
**DE FR GB NL**

(56) References cited:
**DE-A- 885 014**
**DE-A-2 840 556**
**GB-A-1 538 431**
**US-A-3 716 439**
**US-A-4 014 602**
**US-A-4 126 373**

(73) Proprietor: **Joh. Enschedé en Zonen Grafische Inrichting B.V.**
**P.O. Box 114 Klokhuisplein 5**
**NL-2000 AC Haarlem (NL)**

(72) Inventor: **Tijhof, Johan**
**Klokhuisplein 5**
**NL-2011 HK Haarlem (NL)**
Inventor: **Schell, Karel Johan**
**Klokhuisplein 5**
**NL-2011 HK Haarlem (NL)**

(74) Representative: **Kooy, Leendert Willem et al**
**OCTROOIBUREAU VRIESENDORP & GAADE**
**P.O. Box 266**
**NL-2501 AW The Hague (NL)**

Courier Press, Leamington Spa, England.

## Description

The invention relates to a process of manufacturing a plastic token or chip comprising the steps of providing a transparent substrate carrying a hologram in a superficial recording layer and two transparent overlays, and of connecting said overlays to the respective surface of said substrate.

The invention further relates to a plastic token or chip comprising a combination of a transparent substrate and two transparent overlays said substrate carrying a hologram in a superficial recording layer .

A similar process and token or chip are known from US—A—4,126,373. Both overlays are connected to the substrate as disclosed by lamination. The recording layer is disclosed to cover a relatively small intermediate portion of the full surface area of the substrate only. Thus the lamination process can be satisfactory in the whole where it is not effective in the small area of the recording layer. As a consequence the missing connection at the hologram area prejudices the security of the token.

The process of the present invention and its product provide improved security of the recording layer.

The process of the invention is characterized in that the providing step comprises making up each overlay to have a raised outer edge extending from one of its faces, its other face being flat, and that the connecting step comprises cementing fully and completely and in register with the hologram the flat faces of the overlays to the opposite faces of the substrate, the recording layer included.

In a preferred embodiment the process of the invention is further characterized in that said superficial recording layer is an exposed, developed and fixed dichromate sensitized gelatine layer extending over the full surface of the substrate, and that in the cementing step a cyano acrylate cement is used.

The plastic token or chip of the invention is characterized in that one overlay is full-sized and completely cemented to the surface of the transparent substrate covered by the recording layer and the other to the opposite surface, both overlays being moulded to have a raised outer edge extending from the substrate and being in register with the hologram.

The tokens or chips manufactured according to the present process, offer the advantage that the raised edges contribute to conveniently stacking the tokens or chips as a result of a drastic reduction of the interface area of the tokens or chips in a stack.

Also the tokens of the invention display a sparkle when placed in white light on the dark background of a gambling table. Thus their authenticity can be verified from some distance. On the other hand is the hologram in-conspicuous being recording in a transparency.

Hereafter the invention is illustrated with a description of a preferred embodiment including some variations thereof. The description refers to a drawing.

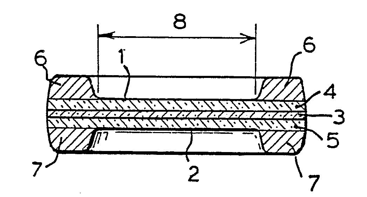

The only figure shows in cross-section a token or chip that is the product of a process according to the present invention.

In the figure the vertical dimensions are exaggerated compared with the approximately full-sized horizontal dimensions. In the figure an overlay 1 is bonded to an overlay 2, a hologram 3 being interleaved in between these overlays. The overlays 1 and 2 each comprise at least one transparent layer 4 and 5 respectively, displaying the hologram in the center portion 8 within their raised edges 6 and 7 respectively.

The hologram is recorded on a flexible substrate using a conventional holographic facility. This substrate comprises a dichromate sensitized gelatin. Said gelatin is applied on a flexible carrier, preferably a polyester film or a polyvinyl acetate film. The gelatin layer is sensitized by immersing the layer into a solution of a dichromate compound, such as potassiumdichromate, ammonium dichromate or the pyridine dichromate complex. During an imagewise exposure of the gelatin layer the hexavalent chromium ion $Cr^{6+}$ is converted by photo-induction into trivalent $Cr^{3+}$. This trivalent chromium ion is capable of cross-linking juxtaposed gelatin molecules, so that the gelatin is hardened where being exposed.

The resulting differences in hardness between the exposed and non-exposed portions of the gelatin layers make up the latent representation of the hologram. By swelling the gelatin layer in a solvent, e.g. water, said latent representation is developed. The exposed portions of the gelatin layer that is to say the hardened portion thereof, absorb water to a considerably lesser degree than the non-exposed portions, so that the hardened representation is converted into a swelling representation. In this manner stress differentials are set up in the gelatin layer between the exposed and the non-exposed portions thereof. These stress differentials cause differences in density and thus result in differences in refractive index of the gelatin. The subsequent fixation of the swelling representation by means of dehydration is effected by immersing the gelatin layer into a solvent for water, such as alcohol, which removes the water from the said layer. The refractive index differentials corresponding with the initial representation form a phase hologram in the first instance. However, it is possible that with appropriate stress differentials and differences in hardness cracks arise in the gelatin layer, said cracks following the stress gradients. By this causing a so-called reticulation the refractive index differentials will be maximal, as they relate to the gelatin/air interface ($\Delta n$ about 0.5).

After fixation by dehydration the gelatin layer is forcibly dried. Therefor the fixation is usually finished with a more or less long after-treatment of the gelatin layer at a higher temperature than room temperature, to remove the water remained behind and harden the gelatin layer by the heat treatment.

The flexible substrate may be made to be a carrier to a representation being applied with a printing technique before and/or after the holographic recording. Accordingly a combination in register of a graphic representation or print and a holographic representation is optional.

The detailed example of recording a hologram on a flexible substrate is as follows.

The substrate is sensitized in a 5% ammonium dichromate solution in distilled water including a wetting agent in a proportion of 1:200 parts. The substrate is kept in the solution at room temperature for ten minutes.

Subsequently the sensitized substrate is dried at room temperature, and optionally forcibly dried in a stream of hot air for some time.

The sensitized substrate is thereafter imagewise exposed in a holographic facility using light having a wave-length of 514.5 nm.

Subsequently the gelatin layer for developing the latent representation is caused to swell in a 5% aqueous solution of potassium hydroxide to which 1:200 parts of a wetting agent are added, at a temperature between 20° and 45°C for three minutes.

After removal of adhering potassium hydroxide solution by rinsing in water at a temperature between 60° and 75°C for some minutes, gradual dehydration is effected in isopropyl alcohol. This step is finished by immersion in pure and concentrated isopropyl alcohol for some minutes.

Finally the substrate is forcibly dried in a stream of hot air.

The two overlays between which the resulting imagewise exposed and developed substrate is finally cemented, are manufactured by printing and stacking dully finished film of polyvinyl acetate or polyacrylate having a thickness of about 0.2 mm. The printed representation is carried out such that the joined films after stacking produce the lay-out of the token or chip. The film or films adjoining the substrate 3, are made of a transparent material, so that the center portion 8 of a token or chip displays the hologram on the substrate. After stacking up, the films are laminated at a temperature of about 150°C and a pressure of about 50 MPa (500 kgf/cm²). One press plate is flat and the opposite plate has such recesses that after lamination the raised edges 6 and 7 respectively are produced. Each of the flat surfaces of both overlays is suitable for application of a printed representation. This print can be applied before the lamination, if use is made of a laminable ink or of laminable inks, such as a HSV type ink (HSV = heat set vinyl ink) for printing. In the printed representation register marks can be caused to register with register marks in the moulding lamination press plate for example. Such register marks also may be put to use as aids when assembling the token or chip whereby the hologram is cemented inbetween the two overlays.

A cyano acrylate cement is used to bond the two overlays 1 and 2 respectively on opposite sides of substrate 3.

After bonding the assembled token or chip body and in particular the outer edge of the substrate is brought into the shape as corresponds with the shape of the overlays 1 and 2. Finishing the assembly is done mechanically.

When using a token or chip made in the above manner a green gaming-table provides a dark background and any lamp over the table acts as a satisfactory white light source. Consequently the hologram can be observed in a wide viewing angle as is typical for a white-light hologram, whereby the hologram can always be perceived by the croupier at the gaming-table.

The sparkling flashes occurring when stacking and selecting the tokens or chips carrying white light reflection holograms provide the croupier with a substantially automatical device to differentiate between genuine and counterfeit tokens or chips.

## Claims

1. A process of manufacturing a plastic token or chip comprising the steps of providing a transparent substrate carrying a hologram in a superficial recording layer and two transparent overlays, and of connecting said overlays to the respective surfaces of said substrate, characterized in that the providing step comprises making up each overlay to have a raised outer edge extending from one of its faces its other faces being flat, and that the connecting step comprises cementing fully and completely and in register with the hologram the flat faces of the overlays to the opposite faces of the substrate, the recording layer included.

2. A process as claimed in claim 1, characterized in that said superficial recording layer is an exposed, developed and fixed dichromate sensitized gelatine layer extending over the full surface of the substrate, and that in the cementing step a cyano acrylate cement is used.

3. A plastic token or chip comprising a combination of a transparent substrate and two transparent overlays said substrate carrying a hologram in a superficial recording layer, characterized in that one overlay is full-size and completely cemented to the surface of the transparent substrate covered by the recording layer and the other to the opposite surface, both overlays being moulded to have a raised outer edge extending outwardly from the substrate and being in register with the hologram.

## Patentansprüche

1. Verfahren zur Herstellung einer Jeton oder Spielmarke aus Kunststoff, das das Besorgen eines transparenten Substrats, das in einer oberflächlichen Aufnahmeschicht ein Hologramm trägt, und von zwei transparenten Deckschichten, und das Verbinden dieser Deckschichten mit den diesbezüglichen Oberflächen des Substrats enthält, dadurch gekennzeichnet, dass das Besorgen die Gestaltung je der beiden Deckschichten mit einem erhöhten Aussenrand, welcher über eine seiner Flächen hervorragt, wobei die andere Fläche eben ist, enthält, und dass das Verbinden das voll und vollständig und in Register mit dem Hologramm Kleben der ebenen Flächen auf die beidseitigen Flächen des Substrats einschliesslich der Aufnahmeschicht, enthält.

2. Verfahren nach Anspruch 1, dadurch gekennzeichnet, dass die oberflächliche Aufnahmeschicht eine belichtete, entwickelte und fixierte, mit Bichromat sensibilisierte Gelatineschicht ist, welche sich über die vollständige Oberfläche des Substrats ausdehnt, und dass beim Kleben ein Cyanoacrylat-Klebemittel verwendet wird.

3. Ein Jeton oder Spielmarke aus Kunststoff, welche ein Verband eines transparenten Substrats und zwei transparenten Deckschichten enthält, wobei das Substrat in einer oberflächlichen Aufnahmeschicht ein Hologramm trägt, dadurch gekennzeichnet, dass die eine Deckschicht voll und vollständig auf die Oberfläche des transparenten Substrats, die der Ausnahmeschicht bedeckt, geklebt ist, und die andere Deckschicht auf die gegenseitige Oberfläche geklebt ist, wobei die beiden Deckschichten derart gestaltet sind, dass sie einen erhöhten Aussenrand haben, welcher von dem Substrat nach Aussen hervorragt, und wobei sie mit dem Hologramm in Register sind.

**Revendications**

1. Procédé de fabrication d'un jeton ou plaquette en matière plastique consistant, en premier lieu, à prévoir un substrat transparent portant un hologramme dans une couche d'impression superficielle et deux éléments de recouvrement et, en second lieu, à relier lesdits éléments de recouvrement aux surfaces respectives opposées dudit substrat, caractérisé en ce que chaque élément de recouvrement présente une face dont la portion périphérique est surélevée par rapport à la portion centrale, la face opposée étant plane, et que la fixation de cet élément de recouvrement comprend un collage complet des faces planes de ces éléments de recouvrement sur les faces opposées du substrat, en coïncidence avec l'hologramme, en enserrant la couche d'impression.

2. Procédé selon la revendication 1, caractérisé en ce que la couche superficielle d'impression est une gélatine sensible au dichromate exposée, développée et fixée, qui recouvre la surface totale du substrat et que, pour le collage, on utilise un ciment-colle au cyano-acrylate.

3. Jeton ou plaquette en matière plastique comprenant la combinaison d'un substrat transparent et de deux éléments de recouvrement transparents, ledit substrat portant un hologramme dans une couche d'impression superficielle, caractérisé en ce que l'un des éléments de recouvrement est fixé sur la totalité de sa surface par collage sur la face du substrat portant la couche d'impression tandis que l'autre élément de recouvrement est fixé sur la face opposée du substrat, les deux éléments de recouvrement étant, par moulage, munis d'une portion périphérique surélevée par rapport à la portion centrale et positionnés en coïncidence avec l'hologramme.